# EUROPÄISCHE PATENTSCHRIFT

(11) **EP 1 992 507 B1**
(45) Veröffentlichungstag und Bekanntmachung des Hinweises auf die Patenterteilung: **26.09.2012**
(21) Anmeldenummer: 08006685.5
(22) Anmeldetag: 01.04.2008
(51) Int. Cl.: B60H 1/22, F23N 1/02

(54) **Verfahren zum Betreiben eines brennstoffbetriebenen Heizgerätes, insbesondere Fahrzeugheizgerät**
Method for operating a fuel driven heating device, in particular a vehicle heating device
Procédé de fonctionnement d'un appareil de chauffage combustible, en particulier pour un appareil de chauffage de véhicule

(30) Priorität: 15.05.2007 DE 102007022716
(43) Veröffentlichungstag der Anmeldung: 19.11.2008
(73) Patentinhaber: J. Eberspächer GmbH & Co. KG, 73730 Esslingen (DE)
(72) Erfinder: Pfister, Wolfgang, 73732 Esslingen (DE); Köberle, Christoph, 70736 Fellbach (DE); Epple, Jürgen, 72135 Dettenhausen (DE); Peschke, Jürgen, 73776 Altbach (DE); Kürner, Rainer, 70794 Filderstadt (DE)
(74) Vertreter: Ruttensperger, Bernhard

(56) Entgegenhaltungen:
- EP-A- 1 375 214
- EP-A- 1 710 103
- DE-A1- 10 144 402
- DE-A1- 10 232 685
- DE-A1- 19 906 284

## Beschreibung

Die vorliegende Erfindung betrifft ein Verfahren zum Betreiben eines brennstoffbetriebenen Heizgerätes, insbesondere Fahrzeugheizgerät, welches Heizgerät einen Brennerbereich, eine Brennstoffzuführanordnung zum Zuführen von Brennstoff zu dem Brennerbereich und eine Verbrennungsluftzuführanordnung zum Zuführen von Verbrennungsluft zu dem Brennerbereich umfasst, gemäß dem Oberbegriff des Anspruchs 1.

Bei derartigen beispielsweise als Zuheizer oder Standheizungen in Fahrzeugen eingesetzten brennstoffbetriebenen Heizgeräten ist im Allgemeinen die Einstellung mehrerer verschiedener diskreter Heizleistungsstufen möglich, um die in einem derartigen Heizgerät bereitgestellte Wärmeenergiemenge an die auch abhängig von Umgebungsbedingungen erforderliche Wärmemenge anzupassen. Um beispielsweise die Temperatur eines flüssigen Wärmeträgers, beispielsweise das Kühlmittel in dem Kühlmittelkreislauf einer Brennkraftmaschine, oder die Temperatur in einem Fahrzeuginnenraum in einem vorgegebenen Bereich bzw. bei einer vorgegebenen Soll-Temperatur zu halten, wird bei derartigen Heizgeräten allgemein so vorgegangen, dass im Rahmen einer so genannten Zweipunktregelung alternierend zwischen zwei Heizleistungsstufen hin- und hergesprungen wird. Bei einer dieser auszuwählenden Heizleistungen ist die bereitgestellte Wärmeenergiemenge für den Bedarf zu gering, bei der anderen zu hoch, so dass durch alternierendes Umschalten eine Einregelung auf eine bestimmte Temperatur oder einen bestimmten Temperaturbereich erzielt werden kann. Diese Vorgehensweise führt zu vergleichsweise großen Leistungssprüngen, was sich einerseits durch die mit einer Änderung der Heizleistung allgemein auch auftretenden Änderungen der Betriebszustände verschiedener Systembereiche des Heizgerätes spürbar macht, beispielsweise durch eine geänderte Geräuschkulisse, andererseits jedoch auch zu vergleichsweise großen Regelschwankungen führt.

Die EP 1 375 241 A1 offenbart ein Verfahren zum Ansteuern eines Heizgerätes, bei welchem beruhend auf einem eine Temperatur eines zu erwärmenden Mediums charakterisierenden Ist-Wert und einen Temperatur-Sollwert bzw. einer aus diesen Werten gebildeten Differenz Regelmaßnahmen ergriffen werden, beispielsweise mit zunehmender Differenz die Heizleistung eines Heizgerätes auch erhöht wird.

Die EP 1 710 103 A1 offenbart ein Verfahren zum Betreiben eines Fahrzeugheizsystems, bei welchem in Abhängigkeit von der Temperatur in einem Fahrzeuginnenraum ein Frischluft/Umluft-Verhältnis eingestellt wird. Liegt die Temperatur im Fahrzeuginnenraum nahe einem dafür vorgegebenen SollWert, kann ein Heizbereich derart angesteuert werden, dass er mit reduzierter, beispielsweise minimaler Heizleistung betrieben wird.

Die DE 102 32 685 A1 offenbart ein Heizsystem für ein Fahrzeug, bei welchem die Förderleistung eines Heizluftgebläses beruhend auf der Temperatur in einem Fahrzeuginnenraum eingestellt wird. Die Heizleistung eines Heizgerätes wird beruhend auf einer Austrittstemperatur des durch das Heizgerät erwärmten Heizluftstroms und einer dafür vorgegebenen Soll-Temperatur eingestellt. In Abhängigkeit einer Abweichung der Ist-Temperatur des Heizluftstroms von der Soll-Temperatur wird die freigesetzte Wärmeenergiemenge bzw. die Heizleistung des Heizgeräts verändert.

Es ist daher die Zielsetzung der vorliegenden Erfindung, ein Verfahren zum Betreiben eines brennstoffbetriebenen Heizgerätes, insbesondere Fahrzeugheizgerätes, vorzusehen, mit welchem eine verbesserte Einstellbarkeit der Temperatur eines zu erwärmenden Mediums erreichbar ist.

Erfindungsgemäß wird diese Aufgabe gelöst durch ein Verfahren zum Betreiben eines brennstoffbetriebenen Heizgerätes, insbesondere Fahrzeugheizgerät, welches Heizgerät einen Brennerbereich, eine Brennstoffzuführanordnung zum Zuführen von Brennstoff zu dem Brennerbereich und eine Verbrennungsluftzuführanordnung zum Zuführen von Verbrennungsluft zu dem Brennerbereich umfasst, wobei das Verfahren die Maßnahmen umfasst:
a) Ermitteln einer Ist-Temperatur eines erwärmten oder zu erwärmenden Mediums;
b) Vergleichen der Ist-Temperatur mit einer Soll-Temperatur;
c) in Abhängigkeit von der Abweichung der Ist-Temperatur von der Soll-Temperatur Einstellen der Brennstoffzuführmenge und der Verbrennungsluftzuführmenge derart, dass die Ist-Temperatur im Bereich der Soll-Temperatur liegt oder zu dieser gebracht wird,
wobei bei der Maßnahme c) in Abhängigkeit von der Größe der Abweichung eine kontinuierliche Anpassung der Verbrennungsluftzuführmenge und der Brennstoffzuführmenge erfolgt.

In Abkehr von der aus dem Stand der Technik bekannten Zweipunkteregelung, bei welcher zwischen zwei diskreten Heizleistungsstufen bzw. den diesen diskreten Heizleistungen jeweils zugeordneten Werten für eine Brennstoffzuführmenge bzw. eine Verbrennungsluftzuführmenge hin- und hergesprungen wird, findet bei der erfindungsgemäßen Vorgehensweise eine abhängig von der Größe der Abweichung zwischen der Ist-Temperatur und der Soll-Temperatur, also der Regelabweichung, kontinuierliche Anpassung der Heizleistung, also auch eine entsprechend kontinuierliche Anpassung der Verbrennungsluftzuführmenge und der Brennstoffzuführmenge statt. Größere Heizleistungssprünge bzw. Regelschwankungen können somit vermieden werden. Auch ermöglicht eine derartige kontinuierliche, nicht in diskreten Sprüngen stattfindende Variation der Heizleistung eine entsprechend kontinuierliche Veränderung des Betriebszustandes der Verbrennungsluftzuführanordnung und der Brennstoffzuführanordnung mit der Folge, dass durch diese kontinuierliche Anpassbarkeit der jeweiligen Fördermengen beispielsweise für Fahrzeuginsassen derartige Veränderungen nur deutlich weniger spürbar werden.

Um bei erkannter Abweichung zwischen der Ist-Temperatur und der Soll-Temperatur in zuverlässiger Art und Weise eine Verringerung dieser Abweichung erzielen zu können und dafür die korrekten Anpassungen im Bereich der Brennstoffzuführmenge bzw. Verbrennungsluftzufuhrmenge finden zu können, wird bei der Maßnahme c) in Abhängigkeit von der Größe der Abweichung eine geforderte Heizleistung bestimmt und werden in Zuordnung zu der geforderten Heizleistung eine Verbrennungluftzuführmenge und eine Brennstoffzuführmenge ausgewählt.

Diese geforderte Heizleistung ist begrenzt durch eine minimale Heizleistung und eine maximale Heizleistung und ist in diesem Spektrum zwischen minimaler Heizleistung und maximaler Heizleistung kontinuierlich, also nicht nur in diskreten Sprüngen, auswählbar.

Erfindungsgemäß ist die maximale Heizleistung in Abhängigkeit von wenigstens einem Betriebsparameter, nämlich der Umgebungstemperatur, veränderbar. Dabei kann so vorgegangen werden, dass mit ansteigender bzw. höherer Umgebungstemperatur eine geringere maximale Heizleistung vorgegeben wird. Damit kann berücksichtigt werden, dass im Allgemeinen bei höherer Umgebungstemperatur der auftretende Wärmebedarf auch zur Eliminierung von Regelabweichungen geringer ist, als bei niedrigeren Umgebungstemperaturen. Dies vereinfacht die Durchführung des Regelvorgangs bzw. erhöht die Präzision, mit welcher eine Ist-Temperatur an die Soll-Temperatur heangeführt wird, und vermeidet zu ausgeprägte Überschwinger in der Regelcharakteristik.

Es hat sich gezeigt, dass bei den mit dem erfindungsgemäßen Verfahren zu betreibenden brennstoffbetriebenen Heizgeräten die Heranführung der Ist-Temperatur an die Soll-Temperatur bzw. das Halten der Ist-Temperatur im Bereich der Soll-Temperatur dann besonders gut durchgeführt werden können, wenn die Einstellung der Brennstoffzuführmenge und der Verbrennungsluftzuführmenge in Abhängigkeit von der Größe der Abweichung gemäß einer PID-Regelcharakteristik oder einer PD-Regelcharakteristik erfolgt.

Auch die Soll-Temperatur kann in Abhängigkeit von wenigstens einem Betriebsparameter, beispielsweise wiederum der Umgebungstemperatur, veränderbar sein. Da auch hier im Allgemeinen höhere Umgebungstemperaturen eine niedrigere Temperatur des zu erwärmenden Mediums, beispielsweise der in einem Kühlmittelkreislauf strömenden Kühlflüssigkeit, zulassen, kann mit ansteigender Umgebungstemperatur die Soll-Temperatur herabgesetzt werden.

Gemäß einem weiteren Aspekt kann bei der erfindungsgemäßen Vorgehensweise vorgesehen sein, dass die in Abhängigkeit von der Größe der Abweichung auszuwählende Verbrennungsluftzuführmenge oder/und Brennstoffzuführmenge in Abhängigkeit von wenigstens einem Betriebsparameter veränderbar ist. Dieser Betriebsparameter kann eine Höhenlage repräsentieren, kann also beispielsweise angeben, wie hoch über dem Meeresniveau ein Fahrzeug mit einem derartigen brennstoffbetriebenen Heizgerät, sich befindet. Hier kann also berücksichtigt werden, dass mit ansteigender Höhe über dem Meeresspiegel der Sauerstoffgehalt bzw. allgemein die Luftdichte abnimmt. Da im Allgemeinen für eine vorgegebene Heizleistung die erforderliche bzw. zu fördernde Verbrennungsluftzuführmenge dadurch eingestellt wird, dass eine bestimmte Drehzahl für ein Verbrennungsluftgebläse vorgegeben wird, wird bei zunehmender Höhe über dem Meeresspiegel bei nicht veränderter Drehzahl eine zu geringe Verbrennungsluftmenge gefördert und somit ein zu fettes Gemisch zur Verbrennung gebracht. Um dem entgegenwirken zu können, kann mit zunehmender Höhenlage dann die Brennstoffzuführmenge verringert werden, so dass bei an sich ungeänderter Betriebscharakteristik, insbesondere ungeänderter Drehzahl einer Verbrennungsluftzuführanordnung, durch verringerte Zuführmenge wieder ein Mischungsverhältnis von Luft und Brennstoff erzielt wird, wie dies auch für normale Höhenlagen, also beispielsweise auf Meeresniveau sich befindendem Fahrzeugheizgerät, der Fall wäre.

Die vorliegende Erfindung wird nachfolgend mit Bezug auf die beiliegenden Figuren detailliert erläutert. Es zeigt:
- Fig. 1: eine Prinzipansicht eines mit der erfindungsgemäßen Vorgehensweise arbeitenden Fahrzeugheizgerätes;
- Fig. 2: die über der Drehzahl eines Verbrennungsluftgebläses aufgetragene elektrische Leistung eines Elektroantriebsmotors für das Verbrennungsluftgebläse;
- Fig. 3: die über der Höhe beispielsweise über dem Meeresspiegel aufgetragene Veränderung einer Förderfrequenz einer Brennstoffzuführanordnung;
- Fig. 4: über der Umgebungstemperatur aufgetragen die Soll-Temperatur eines zu erwärmenden Mediums bzw. die maximale Heizleistung eines Fahrzeugheizgerätes.

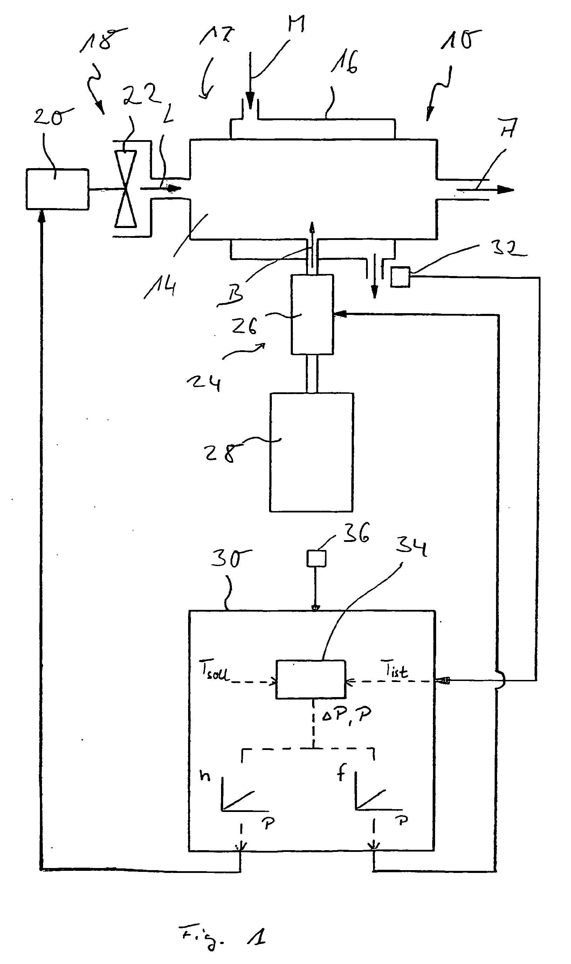

In Fig. 1 ist ein brennstoffbetriebenes Fahrzeugheizgerät allgemein mit 10 bezeichnet. Dieses Fahrzeugheizgerät 10 umfasst einen Brennerbereich 12 mit einer Brennkammer 14, in welche Verbrennungsluft L und Brennstoff B eingespeist werden. Die Verbrennungsluft L wird mit dem Brennstoff B vermischt und gezündet bzw. verbrannt. Bei der Verbrennung entsteht Wärme, die in einem Wärmetauscherbereich 16 auf ein zu erwärmendes Medium M übertragen wird. Im dargestellten Falle kann dieses zu erwärmende Medium M eine Flüssigkeit sein, beispielsweise die in einen Kühlmittelkreislauf einer Brennkraftmaschine strömende Flüssigkeit, die auch dazu genutzt wird, Wärme auf die in einen Fahrzeuginnenraum einzuleitende Luft zu übertragen und mithin den Fahrzeuginnenraum zu erwärmen. Die bei der Verbrennung entstehenden Abgase verlassen als Abgasstrom A den Brennerbereich 12 und werden beispielsweise in ein Abgasführungssystem eines Fahrzeugs eingeleitet.

Die Verbrennungsluft L wird durch eine Verbrennungsluftzuführanordnung 18 in die Brennkammer 14 eingeleitet. Diese umfasst einen Elektromotor 20 als Antrieb sowie ein durch den Elektromotor 20 zur Drehung angetriebenes Förderrad 22. Beispielsweise kann die Verbrennungsluftzuführanordnung 18 als so genanntes Setienkanalgebläse ausgebildet sein. Im Falle eines Luftheizgerätes, in welchem als zu erwärmendes Medium M unmittelbar die in einen Fahrzeuginnenraum einzuleitende Luft genutzt wird, kann durch den Elektromotor 20 gleichzeitig auch das zu erwärmende Medium M in den Wärmetauscherbereich 16 und weiterhin in Richtung Fahrzeuginnenraum gefördert werden.

Die Menge der pro Zeiteinheit in die Brennkammer 14 eingeleiteten Verbrennungsluft L kann durch Vorgeben einer bestimmten Drehzahl des Elektromotors 20 und mithin auch einer bestimmten Drehzahl des Förderrads 22 variiert bzw. eingestellt werden.

Eine Brennstoffzuführanordnung 24 kann beispielsweise eine Dosierpumpe 26 und ein Brennstoffreservoir 28 umfassen. Die Dosierpumpe 26 fördert den flüssigen Brennstoff aus dem Reservoir 28 in die Brennkammer 14, wo der flüssige Brennstoff beispielsweise in einem porösen Verdampfermedium aufgenommen werden kann und durch Abdampfung in Richtung Brennkammer 16 dann mit der Verbrennungsluft L gemischt werden kann. Eine derartige Dosierpumpe 26 arbeitet im Allgemeinen mit einem sich intermittierend hin- und herbewegenden Pumpenkolben, der bei jedem Takt der Hin- und Herbewegung ein bestimmtes Volumen des zu fördernden flüssigen Brennstoffs aus einer Pumpenkammer verdrängt. Da im Allgemeinen dieses Volumen fest vorgegeben ist, kann die Beeinflussung des pro Zeiteinheit in die Brennkammer 14 geförderten Brennstoffs B durch Verändern der Förderfrequenz des Pumpenkolbens erfolgen. Hier ist es beispielsweise bekannt, mit Frequenzen im Bereich von 0,5 bis 10 Hz zu arbeiten. Durch diese Variation der Förderfrequenz kann eine vergleichsweise feine Einstellung der pro Zeiteinheit geförderten Brennstoffmenge erfolgen. Es ist selbstbverständlich möglich, durch zusätzliche Maßnahmen, beispielsweise durch Veränderung des Pumpenkammervolumens, zusätzlich einen noch feiner dosierten Einfluss auf die pro Zeiteinheit geförderte Brennstoffmenge zunehmen.

Eine Ansteuervorrichtung 30 dient dazu, durch Ausgabe entsprechender Ansteuersignale bzw. durch Anlegen entsprechender Spannungen die verschiedenen Systembereiche des Fahrzeugheizgerätes 10 zu aktivieren. So kann beispielsweise die Ansteuervorrichtung 30 dafür sogen, dass an den Elektromotor 20 der Verbrennungsluftzuführanordnung 18 ein getaktetes Spannungssignal angelegt wird, das im Wesentlichen aus der zur Verfügung stehenden Borspannung generiert wird und dessen Tatsverhältnis zu einer mittleren Spannung führt, die wiederum maßgebend ist für die bei dem Elektromotor 20 dann sich einstellende Drehzahl. In entsprechender Weise kann an die Dosierpumpe 26 ein getaktetes Spannungssignal angelegt werden, wobei immer dann, wenn die Spannung angelegt wird, eine Spulenanordnung erregt wird und der Pumpenkolben in einer Richtung bewegt wird, während beispielsweise durch eine Vorspannanordnung bei nicht mehr angelegter Spannung der Kolben sich dann in entgegengesetzter Richtung bewegt. Hier wird also für jeden Arbeitstakt dann ein für die Zeitdauer der erforderlichen Erregung der Spulenanordnung erforderliches Spannungssignal angelegt.

Um die Heizleistung des Fahrzeugheizgerätes 10 beeinflussen zu können, ist es bekannt, die Menge des zugeführten Brennstoffs B und die Menge der zugeführten Verbrennungsluft L zu variieren, wobei im Allgemeinen das Verhältnis der Brennstoffzuführmenge zur Verbrennungsluftzuführmenge so gewählt wird, dass optimale Verbrennungsbedingungen, insbesondere minimale Schadstoffausstöße erzeugt werden. Insbesondere ist es bekannt, in Richtung geringerer Heizleistung mit einem Luftüberschuss im Vergleich zu höheren Heizleistungen bzw. einer maximalen Heizleistung zu arbeiten.

Um mit der erfindungsgemäßen Vorgehensweise das Fahrzeugheizgerät 10 betreiben zu können, erhält die Ansteuervorrichtung 30 als Eingangssignal ein Signal von einem Temperatursensor 32, welcher die Temperatur des Mediums M, im dargestellten Falle also beispielsweise der Kühlflüssigkeit, erfasst. Dabei kann, wie in Fig. 1 erkennbar, der Temperatursensor 32 die Temperatur des den Wärmetauscherbereich 16 verlassenden Mediums M erfassen und ein entsprechendes Temperatursignal als Ist-Temperatur Tᵢₛₜ in die Ansteuervorrichtung 30 eingeben. In der Ansteuervorrichtung 30 kann entweder durch manuelle Interaktion oder auch entsprechend vorgegebener Routinen eine Soll-Temperatur Tₛₒₗₗ gesetzt werden, die dann mit der Ist-Temperatur Tᵢₛₜ von einem Regler bzw. einer Regelroutine 34 verglichen wird. Durch Bestimmung der Größe der Abweichung zwischen der Ist-Temperatur Tᵢₛₜ und der Soll-Temperatur Tₛₒₗₗ wird also eine Regelabweichung ermittelt, die dann in der Ansteuervorrichtung 30 weitergehend dazu genutzt wird, Maßnahmen zu ergreifen bzw. einzuleiten, die eine Verringerung dieser Abweichung zur Folge haben.

Man erkennt in Fig. 1, dass durch die Regelroutine 34 auch ausgehend von der in einem jeweiligen Moment vorhandenen bzw. eingestellten Heizleistung auf der Grundlage der Abweichung zwischen der Ist-Temperatur Tᵢₛₜ und der Soll-Temperatur Tₛₒₗₗ eine Änderung ΔP der Heizleistung bzw. eine für den jeweiligen Zustand der Abweichung zwischen den beiden Temperaturen dann geforderte Heizleistung bestimmt wird, welche im Wesentlichen der Summe der zuvor vorhandenen bzw. bereits eingestellten Heizleistung und der erforderlichen Änderung ΔP der Heizleistung entspricht. Beruhend auf dieser zum Verringern der Regelabweichung also als erforderlich bestimmten Heizleistung P wird dann auf Grund jeweiliger Zusammenhänge eine Drehzahl n für den Elektromotor 20 bzw. das Förderrad 22 bestimmt und wird gleichermaßen eine Förderfrequenz f für die Dosierpumpe 26 bestimmt. Es sei hier noch einmal betont, dass die Drehzahl n bzw. die Förderfrequenz f stellvertretend stehend für jeweilige grundsätzlich damit in Zusammenhang stehende Volumen- bzw. Massenströme der Verbrennungsluft L bzw. des Brennstoffs B. Entsprechend dieser Auswahlprozedur werden dann durch die Ansteuervorrichtung 30 entsprechende Ansteuerbefehle an den Elektromotor 20 bzw. die nicht dargestellte Spulenanordnung der Dosierpumpe 26 ausgegeben, um die jeweils erforderlichen bzw. gewünschten Ströme der Verbrennungsluft L bzw. des Brennstoffs B einzustellen.

Die in der Fig. 1 anhand von P-n- bzw. P-f-Diagrammen prinzipiell dargestellten Zusammenhänge zwischen der geforderten Heizleistung P und der Verbrennungsluftzuführmenge bzw. Brennstoffzuführmenge, jeweils repräsentiert durch die Drehzahl n bzw. die Förderfrequenz f, kann in der Ansteuervorrichtung 30 anhand jeweils vordefinierter Diagramme abgelegt sein, so dass in Zuordnung zu jeder geforderten Heizleistung, die kontinuierlich zwischen einer minimalen Heizleistung und einer maximalen Heizleistung variieren kann, entsprechend kontinuierlich auch ein jeweiliger Wert für die Drehzahl n, also die Verbrennungsluftzuführmenge, und die Förderfrequenz f, also die Brennstoffzuführmenge, ausgewählt werden kann. Durch die permanente Erfassung der Temperatur des Mediums M vermittels des Sensors 32 kann also entsprechend permanent in Rückkopplung überprüft werden, wie die Regelabweichung, also die Differenz zwischen der Ist-Temperatur Tᵢₛₜ und der Soll-Temperatur Tₛₒₗₗ, sich entwickelt, um durch entsprechende Auswahl der erforderlichen Änderung der Heizleistung bzw. der geforderten Heizleistung die gewünschte Tendenz in Richtung Minimierung der Regelabweichung zu erreichen. Da bei der erfindungsgemäßen Vorgehensweise hier nicht in diskreten Heizleistungsstufen gearbeitet wird, sondern im gesamten Bereich zwischen einer minimal möglichen Heizleistung und einer maximalen Heizleistung sowohl die geforderte Heizleistung P als in Zuordnung dazu auch die Drehzahl n bzw. die Förderfrequenz f kontinuierlich auswählbar sind, wird es möglich, eine sehr feinfühlige Heranführung der Ist-Temperatur an die Soll-Temperatur zu erzielen, ohne dass dabei die beim Stand der Technik bekannten Überschwinger durch das permanente Umschalten zwischen zwei diskreten Heizleistungsniveaus auftreten. Durch diese kontinuierliche Variation bzw. Variierbarkeit der Heizleistung wird eine entsprechende kontinuierliche Variation des Betriebszustandes der Verbrennungsluftzuführanordnung 18 und der Brennstoffzuführanordnung 24 erzielt, mit der Folge, dass derartige Änderungen für die in einem Fahrzeug sich befindenden Personen praktisch nicht spürbar werden.

Bei der erfindungsgemäßen Vorgehensweise kann selbstverständlich die Ist-Temperatur Tᵢₛₜ auch an anderer Stelle ermittelt werden, beispielsweise dort, wo das Medium M, im dargestellten Beispiel also die Flüssigkeit, in den Wärmetauscherbereich 16 einströmt. Ist das zu erwärmende Medium Luft, die in einen Fahrzeuginnenraum einzuleiten ist, um diesen zu erwärmen, so kann die Lufttemperatur ebenfalls beispielsweise am Einströmbereich erfasst werden, also dort, wo die aus dem Fahrzeuginnenraum abgezogene Luft zur Rezirkulation in das Fahrzeugheizgerät 10 bzw. den Wärmetauscherbereich 16 eingeleitet wird. Insbesondere dann, wenn vor Erwärmung dieser Luft jedoch auch von außen herangeleitete Frischluft beigemengt wird, ist es vorteilhaft, die Lufttemperatur im Fahrzeuginnenraum zu messen, also direkt dort, wo eine bestimmte Temperatur eingestellt werden soll.

Der Regler bzw. die Regelroutine kann bei der erfindungsgemäßen Vorgehensweise nach Art eines PID-Reglers oder nach Art eines PD-Reglers ausgestaltet sein. Ferner ist es selbstverständlich möglich, den Zusammenhang zwischen der jeweiligen geförderten Heizleistung P und der Drehzahl n bzw. der Förderfrequenz f nicht als kontinuierlichen Zusammenhang zu gestalten, sondern hier lediglich für einige Bereiche diskrete Werte bzw. Wertepaare zu definieren und für zwischen diesen diskreten Werten liegende geforderte Heizleistungen dann die jeweiligen Größen n bzw. f durch Interpolation zu ermitteln. Auch auf diese Art und Weise wird eine kontinuierliche Anpassung des Betriebsverhaltens der Brennstoffförderanordnung 24 und der Verbrennungsluftförderanordnung 28 ermöglicht.

Bewegt sich ein mit einem derartigen Fahrzeugheizgerät 10 ausgestattetes Fahrzeug in verschiedenen Höhenlagen, beispielsweise beim Überqueren eines Gebirgspasses, so führt dies dazu, dass das Fahrzeugheizgerät 10 unter verschiedenen Umgebungsbedingungen betrieben wird, in welchen die Luftdichte unterschiedlich bzw. der pro Volumenanteil vorhandene Sauerstoff ist. Dies führt zu veränderten Verbrennungsbedingungen, insbesondere in der Richtung, dass bei zunehmender Höhenlage ein zunehmend fettes Gemisch verbrannt wird. Gemäß einem weiteren Aspekt der Erfindung kann die Höhenlage bei der Zuordnung jeweiliger Werte für die Drehzahl n bzw. die Förderfrquenz f zu einer geforderten Heizleistung P berücksichtigt werden, um dafür zu sorgen, dass unabhängig von der jeweils eingenommenen Höhenlage unter korrekten Verbrennungsbedingungen gearbeitet werden kann.

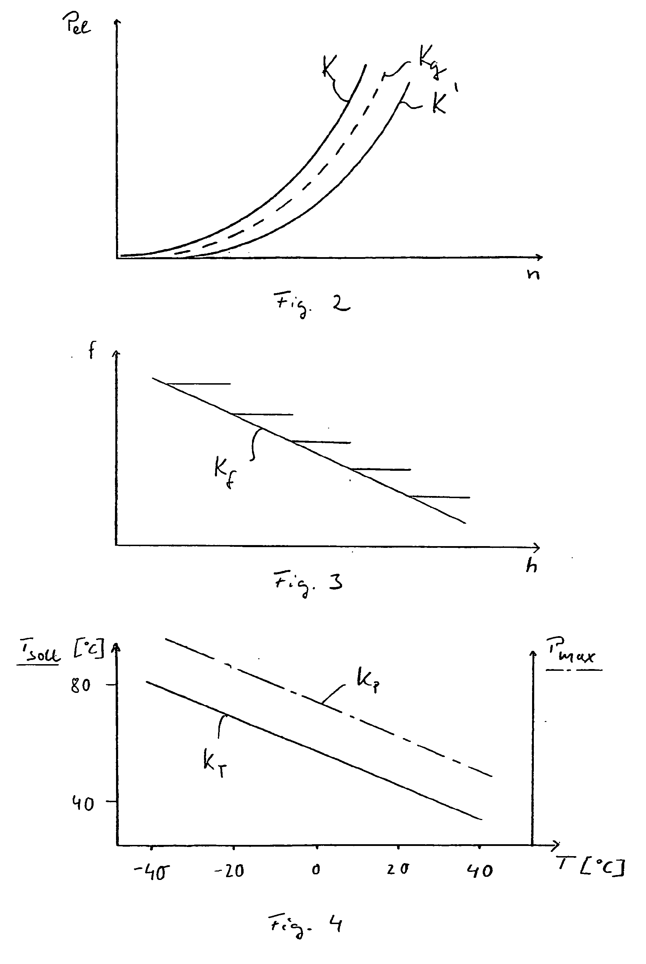

Man erkennt in Fig. 2 aufgetragen über der Drehzahl n des Förderrads 22 bzw. des Elektromotors 20 eine Leistungskennlinie K, die die im Elektromotor 20 aufgenommene elektrische Leistung Pₑₗ wiedergibt. Man erkennt, dass mit zunehmender Drehzahl die elektrische Leistungsaufnahme deutlich ansteigt. Die Kurve K' zeigt die gleiche Kennlinie, jedoch für den Fall, dass das Fahrzeugheizgerät 10 in größerer Höhe betrieben wird. Auf Grund der geringeren Luftdichte muss das Förderrad 22 gegen einen geringeren Widerstand bewegt werden, so dass für eine fest vorgegebene Drehzahl n eine geringere elektrische Leistungsaufnahme vorliegt. Dies kann beispielsweise durch Definition einer Grenzkennlinie K_{G} dazu genutzt werden, bei fest vorgegener bzw. eingeregelter Gebläsedrehzahl n das Überschreiten bzw. Unterschreiten dahingehend auszuwerten, dass das Fahrzeug seine Höhenlage derart geändert hat, dass Anpassungsmaßnahmen bei der Zufuhr der Verbrennungsluft L bzw. des Brennstoffs B erforderlich sind.

Die Fig. 3 zeigt ein Diagramm, das aufgetragen über der Höhenlage h die Förderfrequenz f der Dosierpumpe 26 repräsentiert. Man erkennt einen Zusammenhang K_{f}, der im Wesentlichen linear abfallend ist. Dies bedeutet, dass mit zunehmender Höhenlage die Förderfrequenz f abnimmt, um somit dem mit zunehmender Höhenlage geringeren Sauerstoffanteil bzw. der geringeren geförderten Sauerstoffmenge Rechnung zu tragen. Die Anpassung in der Drehzahl n des Förderrads 22 ist dann nicht erforderlich. An Stelle des durch die Linie K_{f} repräsentierten kontinuierlichen Zusammenhangs können auch die in Fig. 3 erkennbaren diskreten Niveaus vorgegeben werden, die beispielsweise immer dann ausgewählt werden, wenn eine bestimmte von mehreren dann zu definierenden Grenzkennlinien K_{G} überschritten bzw. unterschritten werden.

Die Fig. 4 zeigt aufgetragen über der Umgebungstemperatur T eine Kennlinie K_{T} zu dem Verlauf der Soll-Temperatur Tₛₒₗₗ und eine Kennlinie K_{P} für den Verlauf der maximalen Heizleistung Pₘₐₓ. Bei der erfindungsgemäßen Vorgehensweise kann weiterhin unter Berücksichtigung des Aussgangssignals eines Temperatursensors 36, welcher die Umgebungstemperatur erfasst, eine Anpassung der Soll-Temperatur Tₛₒₗₗ gemäß der Kennlinie K_{T} erfolgen oder/und eine Anpassung der maximalen Heizleistung P_{Max} gemäß der Kennlinie K_{P} erfolgen. Die Anpassung der Soll-Temperatur Tₛₒₗₗ stellt sicher, dass bei vergleichsweise hohen Umgebungstemperaturen das als Wärmeenergieträger dienende Medium nicht übermäßig stark erwärmt wird, obgleich derartige Wärmeenergiemengen gar nicht erforderlich sind und insofern beispielsweise die gewünschte Temperatur in einem Fahrzeuginnenraum nur durch Beimengung kühlerer Außenluft erhalten werden kann. Durch die Begrenzung der maximalen Heizleistung Pₘₐₓ in Abhängigkeit von der Umgebungstemperatur Pₘₐₓ wird sichergestellt, dass dann, wenn derartig große Heizleistungen an sich nicht erforderlich sind, sie auch nicht angesteuert werden können. Auch dies führt zu einer sehr ökonomischen Betriebsweise und hilft u.a. dabei, übermäßige Regelausschläge durch das Ansteuern einer für die Umgebungsbedingungen an sich zu hohen Heizleistung vermieden werden können. Es ist selbstverständlich, dass die in Fig. 4 gezeigten Kennlinien K_{T} und K_{P} nur beispielhaft stehen. Sie können selbstverständlich andere, nicht notwendigerweise lineare Verläufe aufweisen und können, beispielsweise abhängig davon, ob das zu erwärmende Medium M Luft oder Wasser ist, andere Grenzen für die Soll-Temperatur bzw. die maximale Heizleistung vorgeben.

## Patentansprüche

1. Verfahren zum Betreiben eines brennstoffbetriebenen Heizgerätes, insbesondere Fahrzeugheizgerät, welches Heizgerät einen Brennerbereich (12), eine Brennstoffzuführanordnung (24) zum Zuführen von Brennstoff (B) zu dem Brennerbereich (12) und eine Verbrennungsluftzuführanordnung (18) zum Zuführen von Verbrennungsluft (L) zu dem Brennerbereich (12) umfasst, wobei das Verfahren die Maßnahmen umfasst:
a) Ermitteln einer Ist-Temperatur (Tᵢₛₜ) eines erwärmten oder zu erwärmenden Mediums (M);
b) Vergleichen der Ist-Temperatur (Tᵢₛₜ) mit einer Soll-Temperatur (Tₛₒₗₗ);
c) in Abhängigkeit von der Abweichung der Ist-Temperatur (Tᵢₛₜ) von der Soll-Temperatur (Tₛₒₗₗ) Einstellen der Brennstoffzuführmenge und der Verbrennungsluftzuführmenge derart, dass die Ist-Temperatur (Tᵢₛₜ) im Bereich der Soll-Temperatur (Tₛₒₗₗ) liegt oder zu dieser gebracht wird,
wobei bei der Maßnahme c) in Abhängigkeit von der Größe der Abweichung eine kontinuierliche Anpassung der Verbrennungsluftzuführmenge und der Brennstoffzuführmenge erfolgt, wobei in Abhängigkeit von der Größe der Abweichung eine geforderte Heizleistung (ΔP, P) bestimmt wird und in Zuordnung zu der geforderten Heizleistung (ΔP, P) eine Verbrennungluftzuführmenge und eine Brennstoffzuführmenge ausgewählt werden, wobei die geforderte Heizleistung (ΔP, P) zwischen einer minimalen Heizleistung und einer maximalen Heizleistung (Pₘₐₓ) kontinuierlich auswählbar ist,
**dadurch gekennzeichnet, dass** die maximale Heizleistung (Pₘₐₓ) in Abhängigkeit von wenigstens einem Betriebsparameter veränderbar ist, und
dass der wenigstens eine Betriebsparameter eine Umgebungstemperatur (T) ist.

2. Verfahren nach Anspruch 1,
**dadurch gekennzeichnet, dass** mit ansteigender Umgebungstemperatur (T) die maximale Heizleistung (Pₘₐₓ) herabgesetzt wird.

3. Verfahren nach einem der Ansprüche 1 bis 2,
**dadurch gekennzeichnet, dass** die Einstellung der Brennstoffzuführmenge und der Verbrennungsluftzuführmenge in Abhängigkeit von der Größe der Abweichung gemäß einer PID-Regelcharakteristik oder einer PD-Regelcharakteristik erfolgt.

4. Verfahren nach einem der Ansprüche 1 bis 3,
**dadurch gekennzeichnet, dass** die Soll-Temperatur (Tₛₒₗₗ) in Abhängigkeit von wenigstens einem Betriebsparameter veränderbar ist.

5. Verfahren nach Anspruch 4,
**dadurch gekennzeichnet, dass** der wenigstens eine Betriebsparameter eine Umgebungstemperatur (T) ist.

6. Verfahren nach Anspruch 5,
**dadurch gekennzeichnet, dass** mit ansteigender Umgebungstempertaur (T) die Soll-Temperatur herabgesetzt wird.

7. Verfahren nach einem der Ansprüche 1 bis 6,
**dadurch gekennzeichnet, dass** die in Abhängigkeit von der Größe der Abweichung auszuwählende Verbrennungsluftzuführmenge oder/und Brennstoffzuführmenge in Abhängigkeit von wenigstens einem Betriebsparameter veränderbar ist.

8. Verfahren nach Anspruch 7,
**dadurch gekennzeichnet, dass** der wenigstens eine Betriebsparameter eine Höhenlage (h) repräsentiert.

9. Verfahren nach Anspruch 8,
**dadurch gekennzeichnet, dass** mit zunehmender Höhenlage (h) die Brennstoffzuführmenge verringert wird.

## Claims

1. A method for operating a fuel operated heating device, in particular a vehicle heating device, the heating device comprising a burner section (12), a fuel supply arrangement (24) for supplying fuel (B) to said burner section (12) and a combustion air supply arrangement (18) for supplying combustion air (L) to said burner section (12), the method comprising the following measures:
a) determining an actual temperature (Tᵢₛₜ) of a heated medium (M) or a medium to be heated;
b) comparing said actual temperature (Tᵢₛₜ) with a target temperature (Tₛₒₗₗ);
c) depending on the deviation of said actual temperature (Tᵢₛₜ) from said target temperature (Tₛₒₗₗ) defining the fuel supply volume and the combustion air supply volume so that said actual temperature (Tᵢₛₜ) is in the range of said target temperature (Tₛₒₗₗ) or is brought to the latter,
a continuous modification of said combustion air supply volume and said fuel supply volume being carried out in measure c) depending on the amount of deviation,
wherein a required heating performance (ΔP, P) is determined depending on the amount of deviation and a combustion air supply volume as well as a fuel supply volume are selected in association to the required heating performance (ΔP, P),
wherein the required heating performance (ΔP, P) is continuously selectable between a minimum heating performance and a maximum heating performance,
**characterized in that** said maximum heating performance (Pₘₐₓ) is modifiable in relation to at least one operating parameter and
**in that** the at least one operating parameter is the ambient temperature (T).

2. The method according to claim 1,
**characterized in that** with an increasing ambient temperature (T) said maximum heating performance (Pₘₐₓ) is reduced.

3. The method according to one of claims 1 to 2,
**characterized in that** the definition of said fuel supply volume and said combustion air supply volume depending on the amount of deviation are carried out according to PID control characteristics or PD control characteristics.

4. The method according to one of claims 1 to 3,
**characterized in that** said target temperature (Tₛₒₗₗ) is modifiable in relation to at least one operating parameter.

5. The method according to claim 4,
**characterized in that** the at least one operating parameter is an ambient temperature (T).

6. The method according to claim 5,
**characterized in that** with an increasing ambient temperature (T) said target temperature is reduced.

7. The method according to one of claims 1 to 6,
**characterized in that** said combustion air supply volume or/and fuel supply volume to be selected depending on the amount of deviation is modifiable in relation to at least one operating parameter.

8. The method according to claim 7,
**characterized in that** the at least one operating parameter represents an altitude (h).

9. The method according to claim 8,
**characterized in that** with an increasing altitude (h) said fuel supply volume is reduced.

## Revendications

1. Une methode pour opérer un dispositif de chauffage opéré par un combustible, en particulier un dispositif de chauffage pour un véhicule, le dispositif de chauffage comprenant une section de brûleur (12), un arrangement d'alimentation en combustible (24) pour transporter du combustible (B) à la section de brûleur (12) et un arrangement d'alimentation en air de combustion (18) pour transporter de l'air de combustion (L) à la section de brûleur (12), la méthode comprenant les mesures suivantes :
a) déterminer une température réelle (Tᵢₛₜ) d'un medium (M) chauffé ou à chauffer;
b) comparer la température réelle (Tᵢₛₜ) à une température cible (Tₛₒₗₗ);
c) en fonction de la déviation entre la température réelle (Tᵢₛₜ) et la température cible (Tₛₒₗₗ) ajuster le volume d'alimentation en combustible et le volume d'alimentation en air de combustion de sorte que la température réelle (Tᵢₛₜ) se trouve dans l'ordre de la température cible (Tₛₒₗₗ) ou soit modifiée en conséquence,
lors de la mesure c) le volume d'alimentation en combustible et le volume d'alimentation en combustible étant adaptés continuellement en fonction de l'ampleur de la déviation,
une performance de chauffage (ΔP, P) exigée étant déterminée en fonction de l'ampleur de la déviation et un volume d'alimentation en air de combustion ainsi qu'un volume d'alimentation en combustible étant choisis en fonction de la performance de chauffage (ΔP, P) exigée,
la performance de chauffage (ΔP, P) exigée pouvant être choisie continuellement entre une performance de chauffage minimale et une performance de chauffage maximale (Pₘₐₓ),
**caractérisée par** la performance de chauffage maximale (Pₘₐₓ) pouvant être modifiée en fonction d'au moins un paramètre opératoire, et par le au moins un paramètre opératoire étant une température ambiante (T).

2. La méthode selon la revendication 1,
**caractérisée par** la performance de chauffage maximale (Pₘₐₓ) étant réduite pour une température ambiante (T) croissante.

3. La méthode selon une des revendications 1 à 2,
**caractérisée par** l'ajustement du volume d'alimentation en combustible et du volume d'alimentation en air de combustion se faisant en fonction de l'ampleur de la déviation selon les caractéristiques de contrôle PID ou les caractéristiques de contrôle PD.

4. La méthode selon une des revendications 1 à 3,
**caractérisée par** la température cible (Tₛₒₗₗ) pouvant être modifiée en fonction d'au moins un paramètre opératoire.

5. La méthode selon la revendication 4,
**caractérisée par** le au moins un paramètre opératoire étant une température ambiante (T).

6. La méthode selon la revendication 5,
**caractérisée par** la température cible étant réduite lorsque la température ambiante (T) augmente.

7. La méthode selon une des revendications 1 à 6,
**caractérisée par** le volume d'alimentation en air de combustion ou/et le volume d'alimentation en combustible à sélecter en fonction de l'ampleur de la déviation pouvant être modifiés en fonction d'au moins un paramètre opératoire.

8. La méthode selon la revendication 7,
**caractérisée par** le au moins un paramètre opératoire représentant l'altitude (h).

9. La méthode selon la revendication 8,
**caractérisée par** le volume d'alimentation en combustible étant réduit avec une altitude (h) croissante.
